# EUROPÄISCHE PATENTANMELDUNG

(11) **EP 4 190 502 A1**
(43) Veröffentlichungstag der Anmeldung: **07.06.2023**
(21) Anmeldenummer: 21211593.5
(22) Anmeldetag: 01.12.2021
(51) Int. Cl.: B25F 1/00, B25F 5/00, B25F 5/02

(54) **GEFEDERTE KONTAKTE IN EINEM TEILGEHÄUSE FÜR EINEN AKKUMULATOR**

(71) Anmelder: Hilti Aktiengesellschaft, 9494 Schaan (LI)
(72) Erfinder: Mayr, Florian, 87600 Kaufbeuren (DE); Hartmann, Markus, 87665 Mauerstetten (DE); Hainke, Uwe, 01109 Dresden (DE)
(74) Vertreter: Hilti Aktiengesellschaft Corporate Intellectual Property

(57) **Zusammenfassung**

Akkumulator, vorzugsweise als wiederlösbare Energieversorgung für eine Werkzeugmaschine, enthaltend wenigstens eine Energiespeicherzelle und eine Anschlussvorrichtung zum wiederlösbaren Verbinden des Akkumulators mit einer Werkzeugmaschine, wobei die Anschlussvorrichtung wenigstens ein erstes, zweites und drittes Anschlusselement enthält.

Die Anschlussvorrichtung enthält eine Halte- und Aufnahmevorrichtung zum wenigstens teilweisen Aufnehmen des ersten, zweiten und dritten Anschlusselements, wobei jedes Anschlusselement durch wenigstens ein Ausgleichelement so mit der Halte- und Aufnahmevorrichtung verbunden ist, dass eine Relativbewegung in wenigstens eine Richtung zwischen dem Anschlusselement und der Halte- und Aufnahmevorrichtung ausgleichbar ist.

## Beschreibung

Die vorliegende Erfindung betrifft einen Akkumulator, vorzugsweise als wiederlösbare Energieversorgung für eine Werkzeugmaschine, enthaltend wenigstens eine Energiespeicherzelle und eine Anschlussvorrichtung zum wiederlösbaren Verbinden des Akkumulators mit einer Werkzeugmaschine, wobei die Anschlussvorrichtung wenigstens ein erstes, zweites und drittes Anschlusselement enthält.

Sogenannte kabellose Werkzeugmaschinen, wie beispielsweise Akku-Schrauber, Bohrmaschinen, Sägen, Schleifgeräte, oder dergleichen, können zur Energieversorgung mit einem oder mehreren Akkumulatoren verbunden werden. Der Akkumulator weist dabei eine Vielzahl an Energiespeicherzellen auf, auch Akku-Zellen genannt, mit deren Hilfe elektrische Energie aufgenommen, gespeichert und wieder abgegeben werden kann. Wenn der Akkumulator mit einer Werkzeugmaschine verbunden ist, kann die in den Energiespeicherzellen gespeicherte elektrische Energie an die Verbraucher (z.B. ein bürstenloser Elektromotor) der Werkzeugmaschine zugeführt werden. Zum Aufladen, d.h. Befüllen der Energiespeicherzellen mit elektrischer Energie, wird der Akkumulator mit einer Ladevorrichtung verbunden, sodass elektrische Energie zu den Energiespeicherzellen gelangen kann.

Bei der Verwendung bzw. beim Arbeiten mit einer akku-betriebenen Werkzeugmaschine kann es zu nicht unerheblichen Vibrationen und Erschütterungen an der Werkzeugmaschine sowie an dem mit der Werkzeugmaschine verbundenen Akkumulator kommen. Dies ist insbesondere der Fall, wenn es sich bei der Werkzeugmaschine um ein Abrisswerkzeug, wie z.B. ein Meissel- oder Abbruchhammer, handelt. Durch die Vibrationen und Erschütterungen während der Verwendung der Werkzeugmaschine werden nahezu sämtliche Komponenten und Baugruppen der Werkzeugmaschine sowie des Akkumulators mehr oder weniger stark belastet. Diese Belastungen können schließlich zu Beschädigungen an den jeweiligen Bauteilen oder sogar zu einem Totalausfall der ganzen Werkzeugmaschine führen.

Ein besonderes Problem stellt jedoch die Schnittstelle zwischen Werkzeugmaschine und Akkumulator dar. An der Schnittstelle sind die elektrischen Kontakte des Werkzeugmaschine und die elektrischen Kontakte des Akkumulators so miteinander verbunden, dass die in den Energiespeicherzellen gespeicherte elektrische Energie von dem Akkumulator zu der Werkzeugmaschine gelangen kann. Dadurch, dass der Akkumulator lediglich wiederlösbar durch die Schnittstelle mit der Werkzeugmaschine in Kontakt steht, liegen die jeweiligen elektrischen Kontakte der Werkzeugmaschine sowie des Akkumulators kraftschlüssig aneinander an. Derartige kraftschlüssige Verbindungen bestehen dabei gewöhnlich aus einer federnd gelagerten Klammer (d.h. weiblicher Kontakt) und einem in die Klammer einführbaren Einschubelement (d.h. männlicher Kontakt).

Die Vibrationen und Erschütterungen an der Werkzeugmaschine sowie an dem mit der Werkzeugmaschine verbundenen Akkumulator können zu einer Relativbewegung und sogar zu einer tatsächlichen Unterbrechung der Kontaktverbindung führen. Die Relativbewegung ist vermeiden, da durch diese es zu einer Abnutzung bzw. zu einem frühzeitigen Verschleiß der Kontakte kommen kann. Eine Unterbrechung der Kontaktverbindung kann zu einer unerwünschten Funkenbildung oder sogar zu einem Lichtbogen an den Kontakten führen.

Eine vibrations- bzw. erschütterungssichere Verbindung der jeweiligen elektrischen Kontakte Aufgabe der vorliegenden Erfindung ist es daher, eine Akku-Schnittstelle für einen Akkumulator, vorzugsweise als wiederlösbare Energieversorgung für eine Werkzeugmaschine, mit einer Anschlussvorrichtung, welche wenigstens ein erstes, zweites und drittes Anschlusselement bereitzustellen, mit der das vorstehend genannte Problem gelöst sowie eine vibrations- bzw. erschütterungssichere Verbindung erreicht werden kann.

Die Aufgabe wird gelöst durch den Gegenstand des unabhängigen Patentanspruchs 1. Vorteilhafte Ausführungsformen des erfindungsgemäßen Gegenstands sind in den abhängigen Patentansprüchen enthalten.

Die Aufgabe wird insbesondere gelöst durch einen Akkumulator, vorzugsweise als wiederlösbare Energieversorgung für eine Werkzeugmaschine, enthaltend wenigstens eine Energiespeicherzelle und eine Anschlussvorrichtung zum wiederlösbaren Verbinden des Akkumulators mit einer Werkzeugmaschine, wobei die Anschlussvorrichtung wenigstens ein erstes, zweites und drittes Anschlusselement enthält.

Erfindungsgemäß ist vorgesehen, dass die Anschlussvorrichtung eine Halte- und Aufnahmevorrichtung zum wenigstens teilweisen Aufnehmen des ersten, zweiten und dritten Anschlusselements enthält, wobei jedes Anschlusselement durch wenigstens ein Ausgleichelement so mit der Halte- und Aufnahmevorrichtung verbunden ist, dass eine Relativbewegung in wenigstens eine Richtung zwischen dem Anschlusselement und der Halte- und Aufnahmevorrichtung ausgleichbar ist.

Hierdurch kann auf einfache Art und Weise an den Anschlusselementen wirkenden Vibrationen und Erschütterungen ausgeglichen werden, die zu einer Relativbewegung und sogar zu einer tatsächlichen Unterbrechung der Kontaktverbindung zwischen dem Akkumulator und der Werkzeugmaschine führen kann.

Entsprechend einer vorteilhaften Ausführungsform der vorliegenden Erfindung kann daher vorgesehen sein, dass die Halte- und Aufnahmevorrichtung wenigstens eine erste, zweite und dritte im Wesentlichen längliche Kammer enthält, in die jeweils ein Anschlusselement mit einem dazugehörigen Ausgleichelement positionierbar ist, sodass das Anschlusselement mit Hilfe des dazugehörigen Ausgleichelements reversibel in einer Richtung relativ zu der jeweiligen Kammer bewegbar ist.

Eine Kammer kann dabei mehr als ein einziges Anschlusselement aufnehmen. So kann beispielsweise eine erste Kammer zwei oder mehr als zwei als Pluspole ausgestaltete Anschlusselemente enthalten. Dementsprechend kann auch eine zweite Kammer zwei oder mehr als zwei als Minuspole ausgestaltete Anschlusselemente sowie eine dritte Kammer zwei oder mehr als zwei als Kommunikationselement ausgestaltete Anschlusselemente enthalten. Gemäß alternativer Ausführungsformen kann es möglich sein, dass jede Kammer in Form eines Rahmens ohne durchgehende bzw. geschlossene Seitenwände ausgestaltet ist.

Das Ausgleichelement kann dabei in Form einer Feder und insbesondere einer Spiralfeder ausgestaltet sein. Alternativ kann das Ausgleichelement als ein Bauteil mit einem elastisch verformbaren Werkstoff ausgestaltet ist. Als Werkstoff ist dabei auch ein Elastomer möglich. Hierdurch kann auf einfache Art und Weise einer vibrationsbedingten Bewegung des Anschlusselements in mehreren Richtungen, d.h. nicht nur in der Richtung zu oder entgegen dem Anschlusselement, entgegengewirkt werden.

Gemäß einer weiteren vorteilhaften Ausführungsform der vorliegenden Erfindung kann vorgesehen sein, dass mindestens zwei Kammern in wenigstens einer Ebene zueinander versetzt an der Halte- und Aufnahmevorrichtung angeordnet sind. Hierdurch kann ein mechanischer Widerstand verringert werden, der entstehen kann, wenn zu viele Anschlusselemente auf einer Ebene liegend gleichzeitig mit korrespondierenden Kontaktelementen einer Werkzeugmaschine oder eines Ladegeräts in eine Kontaktverbindung gebracht werden sollen. Durch die versetzte Anordnung kann zunächst eine erste Anzahl an Anschlusselementen des Akkumulators mit korrespondierenden Verbindungselementen einer Werkzeugmaschine oder eines Ladegeräts in eine Kontaktverbindung gebracht und anschließend eine zweite Anzahl an Anschlusselementen des Akkumulators mit korrespondierenden Verbindungselementen einer Werkzeugmaschine oder eines Ladegeräts in eine Kontaktverbindung gebracht werden.

Entsprechend einer zusätzlichen vorteilhaften Ausführungsform der vorliegenden Erfindung kann vorgesehen sein, dass die erste Kammer durch ein erstes elastisches Verbindungselement mit der zweiten Kammer und die zweite Kammer durch ein zweites elastisches Verbindungselement mit der dritten Kammer verbunden ist. Hierdurch kann einer Relativbewegung aufgrund von Vibrationen und Erschütterungen zwischen der ersten, zweiten sowie dritten Kammer auf einfache Art und Weise entgegengewirkt werden.

Gemäß einer weiteren vorteilhaften Ausführungsform der vorliegenden Erfindung kann vorgesehen sein, dass die erste Kammer durch ein erstes starres Verbindungselement mit der zweiten Kammer und die zweite Kammer durch ein zweites starres Verbindungselement mit der dritten Kammer verbunden ist. Hierdurch kann eine Relativbewegung zwischen der ersten Kammer und der zweiten Kammer sowie eine Relativbewegung zwischen der zweiten Kammer und der dritten Kammer verhindert werden. Des Weiteren kann hierdurch auch eine Relativbewegung zwischen der ersten Kammer und der dritten Kammer verhindert werden.

Entsprechend einer vorteilhaften Ausführungsform der vorliegenden Erfindung kann daher vorgesehen sein, dass die Verbindungselemente der Werkzeugmaschine oder eines Ladegeräts in Form von stiftartigen Steckern und die Anschlusselemente der Akku-Schnittstelle in Form von Klemmen mit elastisch verformbaren Platten zur Aufnahme von stiftartigen Steckern ausgestaltet sind.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine Seitenansicht einer erfindungsgemäßen Werkzeugmaschine mit einem an der Werkzeugmaschine angeschlossenen Akkumulator;
- Figur 2: eine weitere Seitenansicht der erfindungsgemäßen Werkzeugmaschine mit einem von der Werkzeugmaschine getrennten Akkumulator;
- Figur 3: eine perspektivische Detailansicht auf eine Schnittstellenvorrichtung der Werkzeugmaschine;
- Figur 4: eine Seitenansicht auf den Akkumulator mit einer Anschlussvorrichtung;
- Figur 5: eine Draufsicht auf die Anschlussvorrichtung des Akkumulators gemäß der ersten Ausführungsform;
- Figur 6: eine perspektivische Ansicht auf die Anschlussvorrichtung des Akkumulators gemäß der ersten Ausführungsform; und
- Figur 7: eine perspektivische Ansicht auf die Anschlussvorrichtung des Akkumulators gemäß einer zweiten Ausführungsform.

### Ausführungsbeispiele:

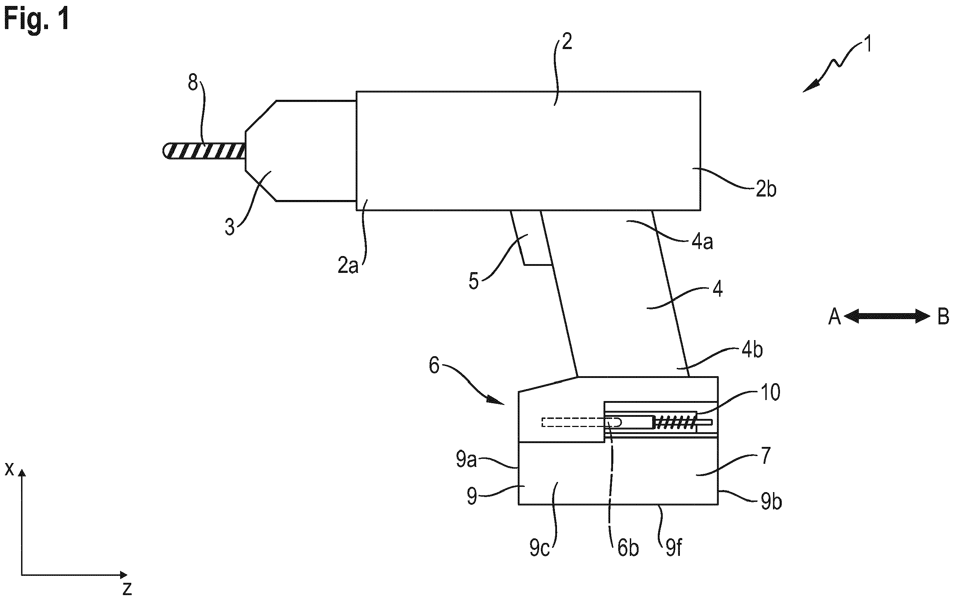

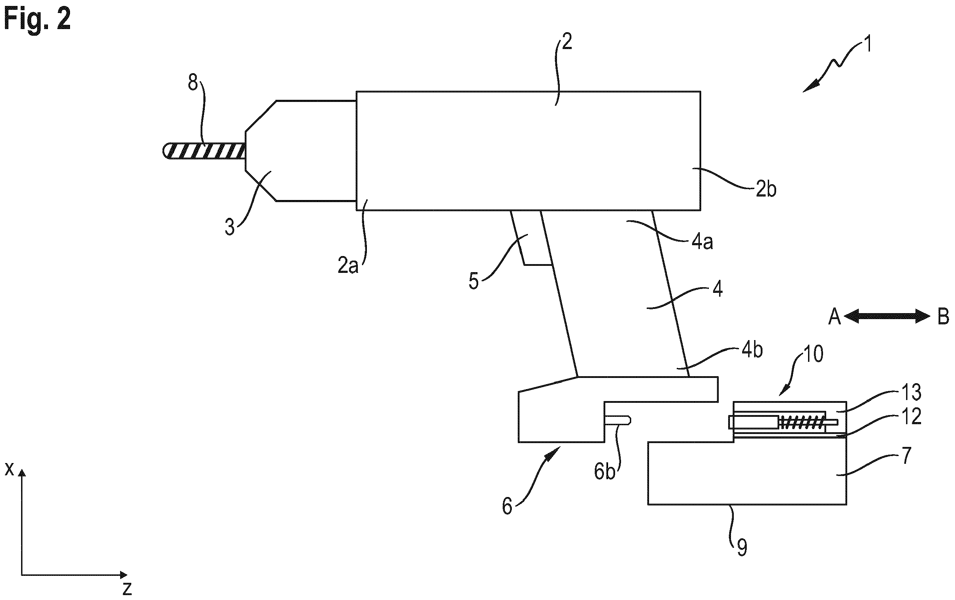

In den Figuren 1 und 2 ist eine beispielhafte Ausführungsform einer Werkzeugmaschine 1 dargestellt.

Die Werkzeugmaschine 1 ist dabei in Form einer Bohrmaschine ausgestaltet. Es ist jedoch auch möglich, dass es sich bei der Werkzeugmaschine 1 um einen Bohrhammer, eine Kreissäge, ein Schleifgerät oder dergleichen handelt.

Die in den Figuren 1 und 2 dargestellte Werkzeugmaschine 1 enthält im Wesentlichen ein Gehäuse 2, eine Werkzeugaufnahme 3, einen Handgriff 4 mit einem Aktivierungsschalter 5. Des Weiteren enthält die Werkzeugmaschine 1 eine Schnittstellenvorrichtung 6 für einen Akkumulator 7.

In Figur 1 ist ein Zustand dargestellt, bei dem der Akkumulator 7 mit der Werkzeugmaschine 1 verbunden ist. Der Akkumulator 7 wird hierzu in Pfeilrichtung A auf die Schnittstellenvorrichtung 6 geschoben. Wie in Figur 2 dargestellt, kann der Akkumulator 7 entsprechend der Pfeilrichtung B wieder von der Schnittstellenvorrichtung 6 und damit von der Werkzeugmaschine 1 entfernt werden. Wenn der Akkumulator 7 mit der Werkzeugmaschine 1 verbunden ist, kann elektrische Energie von dem Akkumulator 7 zu der Werkzeugmaschine 1 gelangen.

Das Gehäuse 2 der Werkzeugmaschine 1 weist ein erstes Ende 2a und ein zweites Ende 2b auf. An einem ersten Ende 2a des Gehäuses 2 ist die Werkzeugaufnahme 3 positioniert. Die Werkzeugaufnahme 3 dient zum Aufnahmen und wiederlösbaren Halten eines Werkzeugs 8. Das in den Figuren 1 und 2 gezeigte Werkzeug 8 ist in Form eines Bohrers ausgestaltet.

Im Inneren des Gehäuses 2 ist ein Elektromotor zum Erzeugen eines Drehmoments positioniert. Der Elektromotor ist damit ein elektrischer Verbraucher elektrischer Energie. Das in dem Elektromotor erzeugte Drehmoment wird über eine Abtriebswelle und ein Getriebe auf die Werkzeugaufnahme 3 übertragen. Mit Hilfe des übertragenen Drehmoments wird das Werkzeug 8 gedreht.

In den Figuren ist weder der Elektromotor, die Abtriebswelle noch das Getriebe im Inneren des Gehäuses 3 gezeigt.

Der Handgriff 4 enthält den Aktivierungsschalter 5, ein erstes Ende 4a sowie ein zweites Ende 4b. Der Aktivierungsschalter 5 dient zum Betätigen bzw. Aktivieren der Werkzeugmaschine 1 durch einen Anwender. Der Anwender ist in den Figuren nicht gezeigt.

An einem zweiten Ende 2b und unterhalb des Gehäuses 2 ist das erste Ende 4a des Handgriffs 4 befestigt.

An dem zweiten Ende 4b des Handgriffs 4 ist die Schnittstellenvorrichtung 6 für eine wiederlösbare Verbindung des Akkumulators 7 positioniert. Gemäß einer ersten Ausführungsform enthält die Schnittstellenvorrichtung 6 ein erstes, zweites und drittes Verbindungselement 6a, 6b, 6c.

Alternativ und entsprechend weiterer Ausführungsformen kann die Schnittstellenvorrichtung 6 auch mehr oder weniger als ein erstes, zweites und drittes Verbindungselement enthalten.

Gemäß der ersten Ausführungsform ist das erste Verbindungselement 6a als Pluspol, das zweite Verbindungselement 6b als Minuspol und das dritte Verbindungselement 6c als Kommunikationselement ausgestaltet. Durch die Ausgestaltung des ersten Verbindungselement 6a als Pluspol und des zweiten Verbindungselement 6b als Minuspol kann ein elektrischer Stromkreis zwischen der Werkzeugmaschine 1 und dem Akkumulator 7 zur Versorgung der Werkzeugmaschine 1 mit elektrischer Energie erzeugt bzw. geschlossen werden. Mit Hilfe des als Kommunikationselement ausgestalteten dritten Verbindungselements 6c können Informationen in Form von Daten und Signalen von der Werkzeugmaschine 1 empfangen und gesendet werden, sodass eine Kommunikation zwischen der Werkzeugmaschine 1 und dem Akkumulator 7 stattfinden kann.

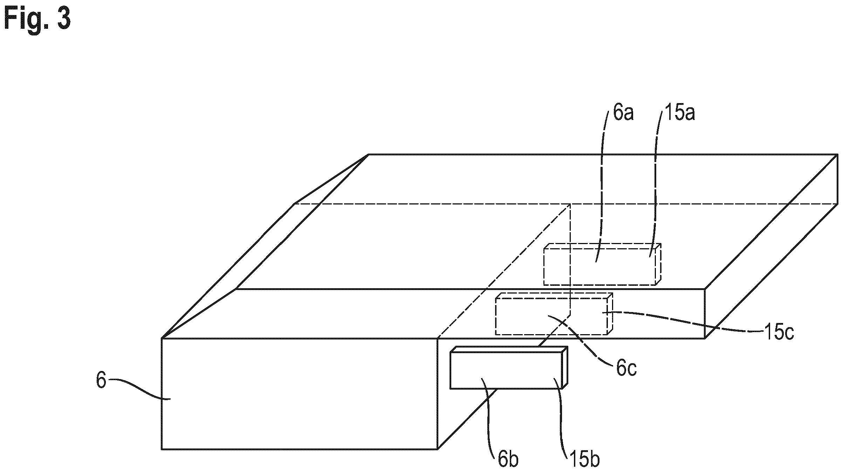

Wie in Figur 3 gezeigt ist das als Kommunikationselement ausgestaltete dritte Verbindungselement 6c dabei an der Schnittstellenvorrichtung 6 zwischen dem als Pluspol ausgestalteten ersten Verbindungselement 6a und dem als Minuspol ausgestalteten zweiten Verbindungselement 6b positioniert und damit im Wesentlichen in der Mitte der Schnittstellenvorrichtung 6 angeordnet. Alternativ sind aber auch andere Anordnungen der drei oder mehr Verbindungselemente möglich.

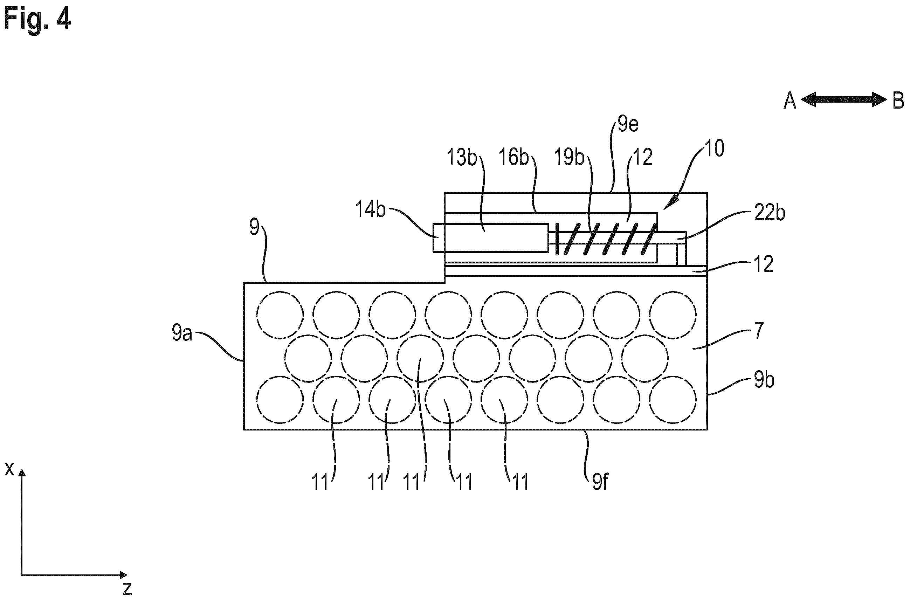

Wie insbesondere in Figur 4 gezeigt enthält der Akkumulator 7 im Wesentlichen ein Akku-Gehäuse 9. Das Akku-Gehäuse 9 enthält dabei wiederum eine Vorderseite 9a, eine Rückseite 9b, eine linke Seitenwand 9c, eine rechte Seitenwand, eine Oberseite 9e und eine Unterseite 9f. In den Figuren 1 und 2 ist lediglich die linke Seitenwand 9c des Akku-Gehäuses 9 gezeigt, wobei jedoch die linke und rechte Seitenwand im Wesentlichen identisch sind.

An der Oberseite 9e des Akku-Gehäuses 9 ist eine Anschlussvorrichtung 10 positioniert. Die Anschlussvorrichtung 10 kann auch als Akku-Schnittstellenvorrichtung bezeichnet werden.

Im Inneren des Akku-Gehäuses 9 ist eine Anzahl an einzelnen miteinander verbundenen Energiespeicherzellen 11, auch Akkuzellen genannt, positioniert. Darüber hinaus sind die jeweiligen Energiespeicherzellen 11 mit der Anschlussvorrichtung 10 verbunden. Mit Hilfe der Energiespeicherzellen 11 kann elektrische Energie in dem Akkumulator 7 aufgenommen, gespeichert und wieder abgegeben werden. Weder die Verbindung der Akkuzellen 11 untereinander noch die Verbindung der Akkuzellen 11 mit der Anschlussvorrichtung 10 sind in den Figuren nicht dargestellt.

Des Weiteren enthält der Akkumulator 7 eine Steuerungsvorrichtung 12, mit deren Hilfe die Funktionen des Akkumulators 7 steuert und geregelt werden. Zu den Funktionen des Akkumulators 7, die von der Steuerungsvorrichtung 12 gesteuert bzw. geregelt werden können, gehören beispielsweise die Regulierung der Menge von elektrischer Energie oder die Blockade der Abgabe von elektrischer Energie aus den Energiespeicherzellen 11. Die Steuerungsvorrichtung 12 des Akkumulators 7 ist mit den Energiespeicherzellen 11 verbunden. Die Verbindungen der Steuerungsvorrichtung 12 mit den einzelnen Energiespeicherzellen 11 sind in den Figuren nicht angezeigt.

Die Anschlussvorrichtung 10 enthält dabei im Wesentlichen eine Halte- und Aufnahmevorrichtung 13 zum Aufnehmen und Halten eines ersten, zweiten und dritten Anschlusselements 13a, 13b, 13c enthält. Das erste, zweite und dritte Anschlusselement 13a, 13b, 13c ist jeweils mit der Steuerungsvorrichtung 12 verbunden.

Entsprechend der ersten Ausführungsform ist das erste Anschlusselement 13a als Pluspol, das zweite Anschlusselement 13b als Minuspol und das dritte Anschlusselement 13c als Kommunikationselement ausgestaltet. Gemäß alternativer Ausführungsformen können mehr als drei Anschlusselemente vorgesehen sein, sodass beispielsweise ein erster und zweiter Pluspol, ein erster und zweiter Minuspol sowie ein erstes und zweites Kommunikationselement in der Halte- und Aufnahmevorrichtung 13 enthalten sind.

Wie in den Figuren 1 und 2 angedeutet, dient das erste als Pluspol ausgestaltete Anschlusselement 13a des Akkumulators 7 zum wiederlösbaren Verbinden mit dem entsprechenden als Pluspol ausgestalteten ersten Verbindungselement 6a der Werkzeugmaschine 1. Das zweite als Minuspol ausgestaltete Anschlusselement 13b des Akkumulators 7 dient wiederum zum wiederlösbaren Verbinden mit dem entsprechenden als Minuspol ausgestalteten zweiten Verbindungselement 6b der Werkzeugmaschine 1. Des Weiteren dient das dritte als Kommunikationselement ausgestaltete Anschlusselement 13c des Akkumulators 7 zum wiederlösbaren Verbinden mit dem entsprechenden als Kommunikationselement ausgestalteten dritten Verbindungselement 6c der Werkzeugmaschine 1.

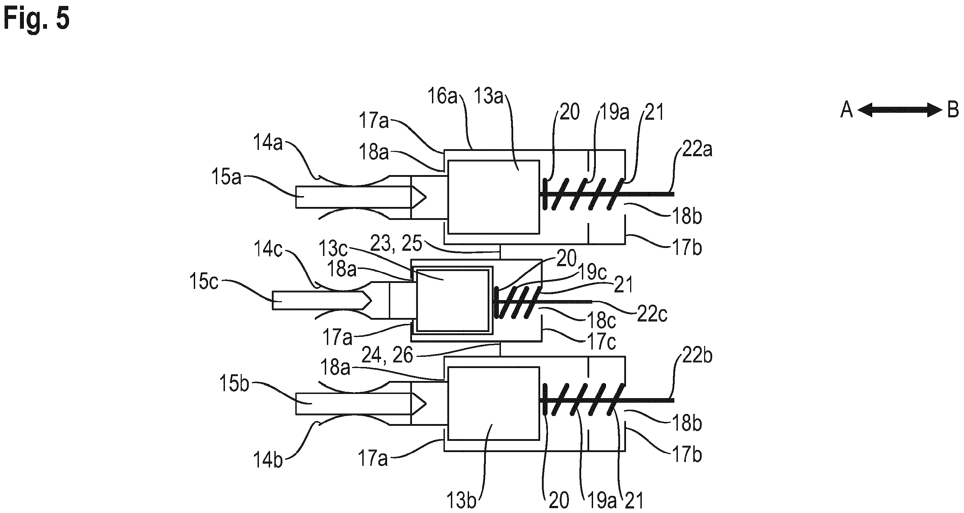

Wie insbesondere in Figur 5 gezeigt, enthält dabei das erste, zweite und dritte Anschlusselement 13a, 13b, 13c des Akkumulators 7 jeweils eine Klemme 14a, 14b, 14c. Die Klemme kann auch als Klammer bezeichnet werden.

Das erste, zweite und dritte Verbindungselement 6a, 6b, 6c der Werkzeugmaschine 1 enthält hingegen jeweils ein Schwert 15a, 15b, 15c als Kontakt. Das Schwert 15a, 15b, 15c kann auch als länglicher Kontaktstift ausgestaltet sein, sodass jedes Verbindungselement 6a, 6b, 6c der Werkzeugmaschine 1 in das entsprechende Anschlusselement 13a, 13b, 13c des Akkumulators 7 aufgenommen werden kann. Durch eine gewisse Federkraft der Anschlusselemente 13a, 13b, 13c wird das Verbindungselement 6a, 6b, 6c festgehalten bzw. in Kontakt gebracht.

Wie ebenfalls in Figur 5 ersichtlich enthält die Anschlussvorrichtung 13 eine erste, zweite und dritte Kammer 16a, 16b, 16c. Jede Kammer 16a, 16b, 16c dient zum Aufnehmen wenigstens eines Anschlusselements 13a, 13b, 13c. Die Kammer 16a, 16b, 16c kann auch als Schacht bezeichnet werden.

Gemäß alternativer Ausführungsformen kann es möglich sein, dass jede Kammer in Form eines Rahmens ohne durchgehende bzw. geschlossene Seitenwände ausgestaltet ist.

Jede Kammer 16a, 16b, 16c weist dabei ein erstes Ende 17a sowie ein zweites Ende 17b auf. An dem ersten Ende 17a einer jeden Kammer 16a, 16b, 16c ist eine erste Öffnung 18a und an dem zweiten Ende 17b einer jeden Kammer 16a, 16b, 16c ist eine zweite Öffnung 18b vorgesehen.

Die Öffnung kann auch als Aussparung bezeichnet werden.

In der ersten Kammer 16a ist das erste Anschlusselement 13a, in der zweiten Kammer 16b ist das zweite Anschlusselement 13b und in der dritten Kammer 16c ist das dritte Anschlusselement 13c positioniert.

Wie bereits vorstehend erwähnt, kann es entsprechend einer alternativen Ausführungsform möglich sein, dass eine Kammer mehr als ein Anschlusselement aufnimmt. So kann beispielsweise eine erste Kammer 16a zwei oder mehr als zwei als Pluspole ausgestaltete Anschlusselemente enthalten. Dementsprechend kann auch eine zweite Kammer 16b zwei oder mehr als zwei als Minuspole ausgestaltete Anschlusselemente sowie eine dritte Kammer 16c zwei oder mehr als zwei als Kommunikationselement ausgestaltete Anschlusselemente enthalten.

Wie bereits vorstehend andeutet ist jede Kammer 16a, 16b, 16c im Wesentlichen länglich ausgestaltet und dabei um eine gewisse Wegstrecke länger dimensioniert als das entsprechende in der jeweiligen Kammer 16a, 16b, 16c positionierte Anschlusselement 13a, 13b, 13c. Die Kammer 16a, 16b, 16c ist länger ausgestaltet, damit das Anschlusselement 13a, 13b, 13c sich in Pfeilrichtung A oder B in der Kammer 16a, 16b, 16c bewegen kann. Durch die erste Öffnung 18a an dem ersten Ende 17a einer jeden Kammer 16a, 16b, 16c ragt die jeweilige Klemme 14a, 14b, 14c eines Anschlusselements 13a, 13b, 13c so aus der jeweiligen Kammer 16a, 16b, 16c heraus, dass die beiden Schenkel einer jeden Klemme 14a, 14b, 14c außerhalb der Kammer 16a, 16b, 16c zum Aufnehmen eines Schwertes 15a, 15b, 15c eines Verbindungselements 6a, 6b, 6c der Werkzeugmaschine frei beweglich sind, vgl. Figur 5.

Des Weiteren enthält jedes Anschlusselement 13a, 13b, 13c jeweils ein Ausgleichelement 19a, 19b, 19c. In dem vorliegenden Ausführungsbeispiel ist jedes Ausgleichelement 19a, 19b, 19c in Form eines Spiralfeder und insbesondere als Druckfeder ausgestaltet. Jede Feder weist dabei ein erstes und zweites Ende 20, 21 auf. Wie insbesondere in Figur 5 gezeigt, ist das erste Ende 20 eines als Feder ausgestalteten Ausgleichelements 19a, 19b, 19c mit dem jeweiligen hinteren Ende eines Anschlusselements 13a, 13b, 13c verbunden. Das zweite Ende 21 eines als Feder ausgestalteten Ausgleichelements 19a, 19b, 19c ist mit dem jeweiligen zweiten Ende 17b einer Kammer 16a, 16b, 16c verbunden. Durch die spezielle Ausgestaltung des Ausgleichelement 19a, 19b, 19c als Druckfeder sowie durch die Positionierung zwischen dem zweiten Ende 17b einer Kammer 16a, 16b, 16c und dem hinteren Ende eines Anschlusselements 13a, 13b, 13c wird das Anschlusselement 13a, 13b, 13c in Pfeilrichtung A gedrückt. Darüber hinaus kann das Anschlusselement 13a, 13b, 13c gegen die Federkraft des Ausgleichelements in Pfeilrichtung B bewegt werden. Eine Bewegung des Anschlusselements 13a, 13b, 13c in Pfeilrichtung A oder B innerhalb der Kammer 16a, 16b, 16c kann durch Vibrationen oder Erschütterungen geschehen.

Das erste, zweite und dritte Anschlusselement 13a, 13b, 13c enthält jeweils eine Verbindungsleitung 22a, 22b, 22c. Die Verbindungsleitung 22a, 22b, 22c dient zum Verbinden der Anschlusselemente 13a, 13b, 13c mit der Steuerungsvorrichtung 12 des Akkumulators 7. Bei dem ersten und zweiten Anschlusselement 13a, 13b ist die jeweilige Verbindungsleitung 22a, 22b ausgestaltet, um einen elektrischen Strom zu leiten.

Die Verbindungsleitung 22a, 22b des ersten und zweiten Anschlusselements 13a, 13b kann auch als Litze bezeichnet werden.

Bei dem dritten Anschlusselement 13c ist die Verbindungsleitung 22c ausgestaltet, um Daten und Informationen in Form von elektrischen Signalen zu leiten.

Wie in den Figuren angedeutet verläuft die jeweilige Verbindungsleitung durch das als Druckfeder ausgestaltete. Ausgleichelement.

Mit Hilfe des als Druckfeder ausgestalteten Ausgleichelements 19a, 19b, 19c werden in einem verbundenen Zustand, d.h. wenn die Anschlusselements 13a, 13b, 13c des Akkumulators 7 und die Verbindungselemente 6a, 6b, 6c der Werkzeugmaschine 1 in Kontakt stehen, die Anschlusselemente 13a, 13b, 13c in Richtung A bzw. in Richtung der Verbindungselemente 6a, 6b, 6c gedrückt.

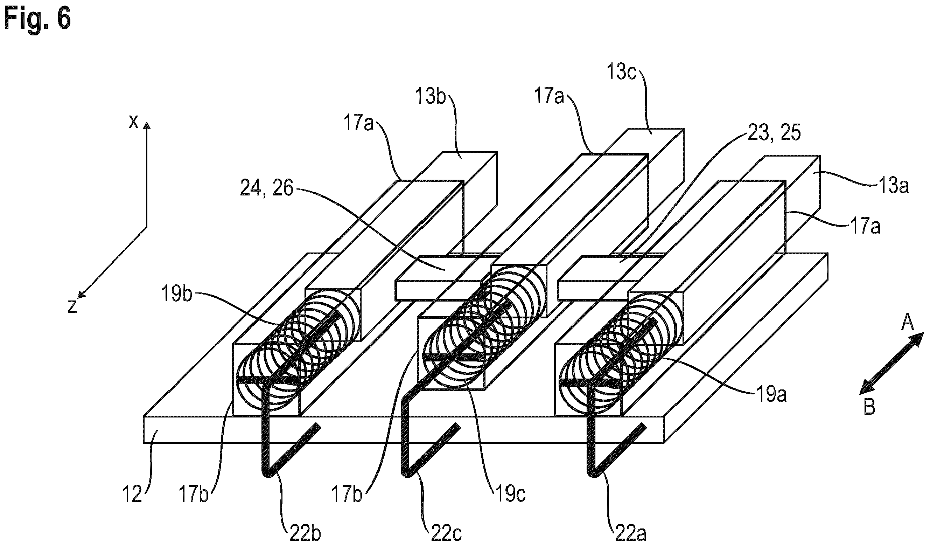

In Figur 6 ist die Halte- und Aufnahmevorrichtung 13 gemäß der ersten Ausführungsform gezeigt. Die erste, zweite und dritte Kammer 16a, 16b, 16c sowie das erste, zweite und dritte Anschlusselement 13a, 13b, 13c sind in einer Ebene positioniert. Das dritte Anschlusselement 13c und die dritte Kammer 16c ist jedoch in Pfeilrichtung A zu dem ersten und zweiten Anschlusselement 13a, 13b sowie der ersten und zweiten Kammer 16a, 16b versetzt angeordnet.

Durch die spezielle versetzte Anordnung der Anschlusselemente 13a, 13b, 13c untereinander wird zunächst das dritte Anschlusselement 13c mit dem korrespondierenden Verbindungselement 6c der Werkzeugmaschine 1 verbunden. Anschließend wird das erste und zweite Anschlusselemente 13a, 13b mit dem korrespondierenden ersten und zweiten Verbindungselement 6a, 6b der Werkzeugmaschine 1 verbunden. Dadurch, dass nicht gleichzeitig alle drei Anschlusselement 13a, 13b, 13c mit den korrespondierenden Verbindungselement 6a, 6b, 6c verbunden werden, ist der mechanische Widerstand beim Verbinden des Akkumulators 7 mit der Werkzeugmaschine 1 geringer.

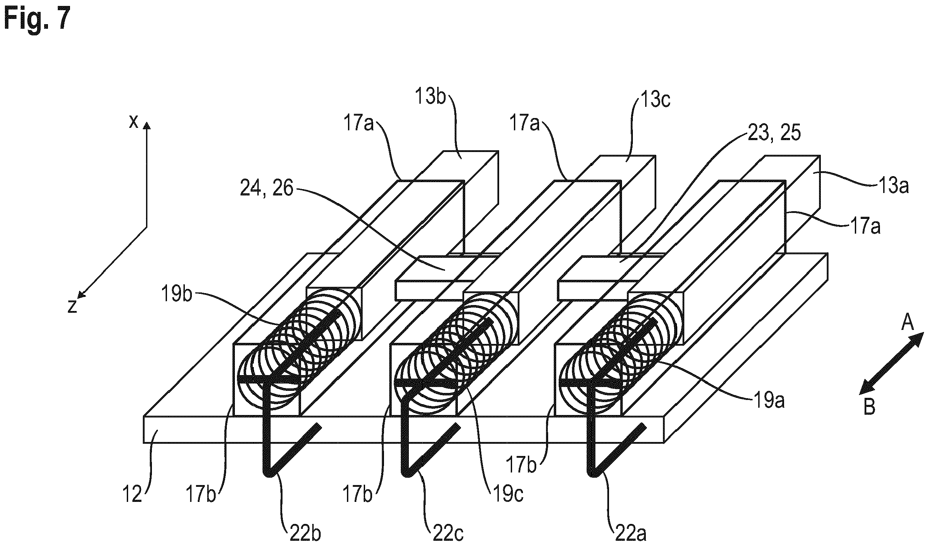

In Figur 7 ist die Halte- und Aufnahmevorrichtung 13 gemäß einer zweiten Ausführungsform gezeigt. Die erste, zweite und dritte Kammer 16a, 16b, 16c sowie das erste, zweite und dritte Anschlusselement 13a, 13b, 13c sind ebenfalls wie in der ersten Ausführungsform in einer Ebene positioniert. Darüber hinaus sind die erste, zweite und dritte Kammer 16a, 16b, 16c sowie das erste, zweite und dritte Anschlusselement 13a, 13b, 13c nicht versetzt und im Wesentlichen in einer Linie angeordnet.

Gemäß einer alternativen Ausführungsform ist die erste Kammer 18a durch ein erstes elastisches Verbindungselement 23 mit der zweiten Kammer 18b und die zweite Kammer durch ein zweites elastisches Verbindungselement 24 mit der dritten Kammer 18c verbunden, vgl. Figur 6 und 7.

Gemäß einer weiteren alternativen Ausführungsform ist die erste Kammer 18a durch ein erstes starres Verbindungselement 25 mit der zweiten Kammer 18b und die zweite Kammer 18b durch ein zweites starres Verbindungselement 26 mit der dritten Kammer 18c verbunden ist, vgl. Figur 6 und 7.

### Bezuaszeichen

- 1: Werkzeugmaschine
- 2: Gehäuse der Werkzeugmaschine
- 2a: erstes Ende des Gehäuses der Werkzeugmaschine
- 2b: zweites Ende des Gehäuses der Werkzeugmaschine
- 3: Werkzeugaufnahme
- 4: Handgriff
- 4a: erstes Ende des Handgriffs
- 4b: zweites Ende des Handgriffs
- 5: Aktivierungsschalter
- 6: Schnittstellenvorrichtung
- 6a: erstes Verbindungselement der Schnittstellenvorrichtung
- 6b: zweites Verbindungselement der Schnittstellenvorrichtung
- 6c: drittes Verbindungselement der Schnittstellenvorrichtung
- 7: Akkumulator
- 8: Werkzeug
- 9: Akku-Gehäuse
- 9a: eine Vorderseite des Akku-Gehäuses
- 9b: eine Rückseite des Akku-Gehäuses
- 9c: eine linke Seitenwand des Akku-Gehäuses
- 9e: eine Oberseite des Akku-Gehäuses
- 9f: eine Unterseite des Akku-Gehäuses
- 10: Anschlussvorrichtung
- 11: Energiespeicherzelle
- 12: Steuerungsvorrichtung
- 13: Halte- und Aufnahmevorrichtung
- 13a: erstes Anschlusselement
- 13b: zweites Anschlusselement
- 13c: drittes Anschlusselement
- 14a: erste Klemme
- 14b: zweite Klemme
- 14c: dritte Klemme
- 15a: erstes Schwert
- 15b: zweites Schwert
- 15c: drittes Schwert
- 16a: erste Kammer
- 16b: zweite Kammer
- 16c: dritte Kammer
- 17a: erstes Ende einer Kammer
- 17b: zweites Ende einer Kammer
- 18a: erste Öffnung einer Kammer
- 18b: zweite Öffnung einer Kammer
- 19a: erstes Ausgleichelement
- 19b: zweites Ausgleichelement
- 19c: drittes Ausgleichelement
- 20: erstes Ende eines Ausgleichelements
- 21: zweites Ende eines Ausgleichelements
- 22a: erste Verbindungsleitung
- 22b: zweite Verbindungsleitung
- 22c: dritte Verbindungsleitung
- 23: erstes elastisches Verbindungselement
- 24: zweites elastisches Verbindungselement
- 25: erstes starres Verbindungselement
- 26: zweites starres Verbindungselement

## Patentansprüche

1. Akkumulator (7), vorzugsweise als wiederlösbare Energieversorgung für eine Werkzeugmaschine (1), enthaltend wenigstens eine Energiespeicherzelle (11) und eine Anschlussvorrichtung () zum wiederlösbaren Verbinden des Akkumulators (7) mit einer Werkzeugmaschine (1), wobei die Anschlussvorrichtung (10) wenigstens ein erstes, zweites und drittes Anschlusselement (13a, 13b, 13c) enthält,
**dadurch gekennzeichnet, dass** die Anschlussvorrichtung (10) eine Halte- und Aufnahmevorrichtung (13) zum wenigstens teilweisen Aufnehmen des ersten, zweiten und dritten Anschlusselements (13a, 13b, 13c) enthält, wobei jedes Anschlusselement (13a, 13b, 13c) durch wenigstens ein Ausgleichelement (19a, 19b, 19c) so mit der Halte- und Aufnahmevorrichtung (13) verbunden ist, dass eine Relativbewegung in wenigstens eine Richtung zwischen dem Anschlusselement (13a, 13b, 13c) und der Halte- und Aufnahmevorrichtung (13) ausgleichbar ist.

2. Akkumulator (7) nach Anspruch 1,
**dadurch gekennzeichnet, dass** die Halte- und Aufnahmevorrichtung (13) wenigstens eine erste, zweite und dritte im Wesentlichen längliche Kammer (18a, 18b, 18c) enthält, in die jeweils ein Anschlusselement (13a, 13b, 13c) mit einem dazugehörigen Ausgleichelement (19a, 19b, 19c) positionierbar ist, sodass das Anschlusselement (13a, 13b, 13c) mit Hilfe des dazugehörigen Ausgleichelements (19a, 19b, 19c) reversibel in einer Richtung relativ zu der jeweiligen Kammer (18a, 18b, 18c) bewegbar ist.

3. Akkumulator (7) nach Anspruch 1 oder 2,
**dadurch gekennzeichnet, dass** mindestens zwei Kammern (18a, 18b, 18c) in wenigstens einer Ebene zueinander versetzt an der Halte- und Aufnahmevorrichtung (13) angeordnet sind.

4. Akkumulator (7) nach Anspruch 2 oder 3,
**dadurch gekennzeichnet, dass** die erste Kammer (18a) durch ein erstes elastisches Verbindungselement (23) mit der zweiten Kammer (18b) und die zweite Kammer durch ein zweites elastisches Verbindungselement (24) mit der dritten Kammer (18c) verbunden ist.

5. Akkumulator (7) nach Anspruch 2 oder 3,
**dadurch gekennzeichnet, dass** die erste Kammer (18a) durch ein erstes starres Verbindungselement (25) mit der zweiten Kammer (18b) und die zweite Kammer (18b) durch ein zweites starres Verbindungselement (26) mit der dritten Kammer (18c) verbunden ist.
